# EUROPÄISCHE PATENTSCHRIFT

(11) **EP 0 605 675 B1**
(45) Veröffentlichungstag und Bekanntmachung des Hinweises auf die Patenterteilung: **12.04.2000**
(21) Anmeldenummer: 93912401.2
(22) Anmeldetag: 30.06.1993
(51) Int. Cl.: C02F 1/46, C02F 3/00

(54) **VERFAHREN ZUM SENKEN DES PHOSPHORGEHALTES IM ABWASSER**
PROCESS FOR LOWERING THE PHOSPHORUS CONTENT OF WASTE WATER
PROCEDE DE REDUCTION DE LA TENEUR EN PHOSPHORE D'EAUX USEES

(30) Priorität: 30.06.1992 AT 132892
(43) Veröffentlichungstag der Anmeldung: 13.07.1994
(73) Patentinhaber: SCHWABEGGER, Johann, A-4224 Wartberg/Aist (AT); LUMETZBERGER, Rudolf, A-4230 Pregarten (AT)
(72) Erfinder: SCHWABEGGER, Johann, A-4224 Wartberg/Aist (AT); LUMETZBERGER, Rudolf, A-4230 Pregarten (AT)
(86) Internationale Anmeldenummer: AT9300110
(87) Internationale Veröffentlichungsnummer: WO9400388

(56) Entgegenhaltungen:
- DE-A- 2 559 043
- DE-B- 1 189 025
- GB-A- 1 252 629
- GB-A- 1 460 195
- Dialog Information Services, File 351, World Patent Index 81-93, Dialog accession no. 003532745, WPI accession no. 82-80737E/38, DANILOVSKII YU S.: Purifying contaminated water by electrolysis using soluble anodes made of iron-aluminium alloy" SU 882945, A, 811123, 8238 (Basic)
- Dialog Information Services, File 351, World Patent Index 81-93, Dialog accession no. 002219397, WPI accession no. 79-18572B/10, DAIKI GUM KOGYO K.K.: "Electrolytically treating waste water to remove phosphorus component - using iron as the anode and aluminium (alloy) as the cathode; ALLOY" JP 54010559, A, 790126, 7910 (Basic)
- Chemical Abstracts, Band 82, Nr 2, 13 Januar 1975, (Columbus, Ohio, US), Dobolyi, E., "Efficient biological waste water purification is a precondition for chemical phosphate removal", 198, Zusammenfassung 7360u, Water Res. 1974, 7 2, 329-42

## Beschreibung

Die Erfindung bezieht sich auf ein Verfahren zum Senken des Phosphorgehaltes im Abwasser, das in einem Reinigungekreislauf über einzelne Behandlungsbecken, wie Vorklärbecken, Belebungsbecken, Nachklärbecken od. dgl., geführt wird.

Der Phosphor- und Stickstoffgehalt des Abwassers bietet die Nährstoffbasis für ein oft unkontrollierbares Algenwachstum, so daß bei jeder Abwasserbehandlung auf das Senken des Phosphorgehaltes großen Wert zu legen ist, da sich durch ein Ausfällen des Phosphors aus dem Abwasser eine praktische Möglichkeit zur Beeinflussung der Algenbildung in den Naturgewässern ergibt. Bisher werden Phosphor und Phosphate in einer chemischen Behandlungsstufe durch Zugabe von chemischen Fällungsmitteln, beispielsweise Eisensalze oder Kalk, aus dem Abwasser ausgefällt, was aber einerseits hohe Kosten für die Chemikalien mit sich bringt und anderseits das Wasser zusätzlich durch die Chemikalien belastet.

JP-A-54 010559 offenbart ein Verfahren zur Entfernung von Phosphat aus Abwasser mittels Gleichstrom elektrolyse. Elektrodenmaterial ist Einsen (Anode) und eine Eisenlegierung bestimmter Zusammensetzung (Kathode). GB-A-2 011 472 offenbart ein Verfahren zur Entfernung von Schwermetallen aus Abwasser, welches in einem Reinigungskreislauf über mehrere Behandlungsbecken geführt wird. Der aufallen de Belebt-Schlamm wird dabei ausgeschleust und in einem oder mehreren Separaten Behandlungsbecken mittels Gleichstrom elektrolyse und unter Einsatz von Metallelektroden elektrolytisch behandelt.

Der Erfindung liegt daher die Aufgabe zugrunde, diese Mängel zu beseitigen und ein Verfahren der eingangs geschilderten Art anzugeben, das auf wirtschaftliche und vor allem auch auf besonders wirkungsvolle Weise eine entscheidende Reduzierung des Phosphorgehaltes im Abwasser erlaubt und die Zugabe von Chemikalien zur Phosphorfällung weitgehend erübrigt.

Die Erfindung löst diese Aufgabe dadurch, daß das Abwasser in einem der Behandlungsbecken, vorzugsweise im Belebungsbecken, mittels Metallelektroden und einer elektrischen Gleichspannung einer Elektrolyse unterworfen wird. Baut sich im Abwasser ein elektrisches Feld auf, kommt es durch die Elektrodenreaktionen und die Ionenwanderung zu chemischen Veränderungen, die eine überraschend starke Phosphorausfällung mit sich bringen, wobei der Phosphor im Klärschlamm angereichert und dann mit dem Überschußschlamm aus dem Reinigungskreislauf abgezogen wird. Der verbleibende Restanteil des Phosphors wird vorzugsweise biologisch im Belebungsbecken durch Mikroorganismen abgebaut, so daß auf umweltfreundliche Weise ohne Zugabe von Chemikalien eine Senkung des Phosphorgehaltes im Abwasser auf ein erwünschtes Ausmaß gewährleistet werden kann.

So wurde beispielsweise in einer Kläranlaue für ca. 10.000 EGW (Einwohnergleichwerte) im Belebungsbecken mit Hilfe zweier an einer 24 V-Gleichstrom-Spannungsquelle angeschlossener rohrförmiger Elektroden aus nichtrostendem Stahl (V4A) die eine Länge von ca. 180 cm und einen Durchmesser von ca. 15 cm besitzen und mit einem gegenseitigen Abstand von ca. 50 cm in das Abwasser eintauchen, eine Elektrolyse durchgeführt, die ohne Zusatz von Fällungsmitteln eine ca. 90 - 95 %ige Senkung des Phosphorgehaltes bis deutlich unter den gesetzlich vorgeschriebenen Grenzwert ergab, wobei die Elektroden nach einer Standzeit von einigen Wochen zu ersetzen waren.

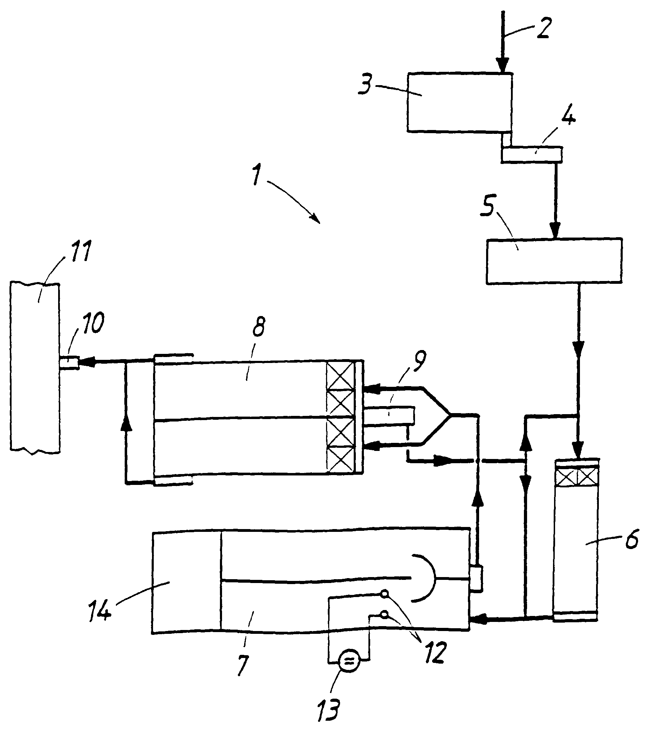

In der Zeichnung ist der Erfindungsgegenstand beispielsweise an Hand eines Anlagenschemas näher veranschaulicht.

In einer Abwasserkläranlage 1 wird das Abwasser einem Reinigungskreislauf unterworfen, wobei es über einen Zulauf 2, ein Regenbecken 3, eine Zulaufschneckenpumpe 4, eine Rechen- und Sandfangeinrichtung 5, ein Vorklärbecken 6, ein Belebungsbecken 7 und ein Nachklärbecken 8 geführt wird. Eine Rücklaufschlammschneckenpumpe 9 fördert den Schlamm aus dem Nachklärbecken 8 teilweise vor und teilweise nach dem Vorklärbecken 6 in den Reinigungskreislauf zurück, und das behandelte Wasser gelangt aus dem Nachklärbecken 8 über den Ablauf 10 in einen Vorfluter 11. Im Belebungsbecken 7 tauchen Merallelektroden 12, die an eine Gleichstromquelle 13 angeschlossen sind, in das Abwasser und ermöglichen den Aufbau eines elektrischen Feldes.

Das in die Kläranlage 1 eingespeiste Abwasser gelangt nach der mechanischen Reinigung durch Rechen- und Sandfangeinrichtung 5 in das Vorklärbecken 6, wo eine Denitrifikarion stattfindet und sich die meisten Schwebstoffe absetzen. Dieser Primärschlamm wird mit dem im Kreislauf zurückgeführten Überschußschlamm aus dem Nachklärbecken 8 dem Vorklärbecken 6 entnommen und in nicht weiter dargestellten Eindickern und Faultürmen weiterbehandelt. Das mechanisch gereinigte und denitrifizierte Abwasser fließt aus dem Vorklärbecken 6 in das Belebungsbecken 7, wo es über die unter einer Gleichspannung stehenden Metallelektroden 12 einer Elektrolyse unterworfen wird, die rationell und wirkungsvoll zu einer Phosphorausfällung führt. Der Restanteil des Phosphors und noch enthaltene organische Substanzen werden hier im Belebungsbecken 7 durch Mikroorganismen weiter abgebaut, wobei spezielle Belüftungseinrichtungen 14 für die entsprechende Sauerstoffzufuhr sorgen. Das aus dem Belebungsbecken 7 abfließende Schlamm-Wassergemisch wird in das Nachklärbecken 8 geleitet, in dem sich der Restschlamm absetzt, und das nun auch biologisch gereinigte Abwasser gelangt vom Nachklärbecken 8 über den Ablauf 10 in den Vorfluter 11.

Der Schlamm aus dem Nachklärbecken 8 wird über die Rücklaufschlammschnecken 9 jeweils hälftig in das Vorklärbecken 6 und in das Belebungsbecken 7 rückgefördert, womit sich der Schlammkreislauf schließt und der gewünschte Reinigungsgrad erreicht wird. Der Überschußschlamm wird, wie eingangs erwähnt, zusammen mit dem Primärschlamm aus dem Vorklärbecken 6 abgezogen.

Die Elektrolyse im erfindungsgemäßen Verfahren braucht lediglich einstufig durchgeführt werden. Trotz einstufiger Führung sind Abtrennungserfolge von über 90% erzielbar.

Es hat sich als günstig erwiesen, die Elektrolyse im Belebungsbecken vorzunehmen. In diesem Becken lauten gleichzeitig biologische Prozesse ab, die ihrerseits eine Phosphatabtrennung begünstigen. Diese Ausführungsform des erfindungsgemäßen Verfahren beruht auf der Erkenntnis, daß sich elektrolytische und biologische Prozesse zur Phosphatabtrennung synergistisch beeinflussen und zu einer verstärkten Phosphatabtrennung führen. Naturgemäß sollte bei einer Elektrolyse im Belebungsbecken die Temperatur des Belebtschlammes nicht zu hoch sein, um die vorhandenen Bakterien nicht abzutöten. Es hat sich gezeigt, daß das erfindungsgemäße Verfahren auch bei Umgebungstemperaturen Phosphatfällungen von über 90% gestattet. Bei dieser Variante des erfindungsgemäßen Verfahrens ist es möglich, die Elektrolyse mit einer Stromdichte von weniger als 0,05 A/dm² Elektrodenoberfläche bei einer Spannung von etwa 24 Volt vorzunehmen. Das erfindungsgemäße Verfahren benötigt somit äußerst wenig elektrische Energie.

Die Temperatur des Belebtschlammes (Gemisch aus Ablauf des Vorklärbeckens 6 und Rücklaufschlamm aus dem Nachklärbecken 8) im Belebungsbecken 7 sollte unter 45 °C sein. Eine externes Erhitzen des Belebtschlammes im Belebungsbecken 7 auf Temperaturen über 40°C ist nicht notwendig. Üblicherweise fließt der Belebtschlamm aus dem Vorklärbecken 6 mit einer Temperatur im Bereich von etwa 4°C (im Winter) bis auf 25°C (im Sommer) zu.

Es hat sich gezeigt, daß die erfindungsgemäße Phosphatfällung dann besonders gut funktioniert, wenn das Phosphat im Abwasser als Orthophosphat vorliegt.

Eine weitere Ausführungsform des erfindungsgemäßen Fällungsverfahrens besteht darin, den Boden und/oder die Wände des Belebungsbeckens elektrisch leitend zu gestalten und als Kathode zu schalten und lediglich die Anode als einzige Elektrode im Belebtschlamm vorzusehen.

Mit dem folgenden Beispiel wird die Erfindung noch näher beschrieben:

### Beispiel

Es wurde nach einer Ausführungsform einer Kläranlage gearbeitet, die in der Figur dargestellt ist.

Der Zulauf von zu klärender Flüssigkeit zum Vorklärbecken 6 betrug 33 m³ Abwasser pro Stunde. Das Abwasser wies einen pH von 7,5, einen chemischen Sauerstoffbedarf (COD) von 600 und 8 mg PO₄³⁻-Phosphor pro Liter auf. Im Vorklärbecken 6 erfolgte eine Denitrifizierung, und anfallender Primärschlamm wurde zusammen mit rückgeführtem Überschußschlamm aus dem Kreislauf abgezogen. Aus dem Vorklärbecken 6 floß Schlammwasser, mit Rücklaufschlamm aus dem Nachklärbecken 8 vermischt, als Belebtschlamm mit einem Feststoffgehalt von 5,5 9 pro Liter und mit 10 zug PO₄³⁻-Phosphor pro Liter in das Belebungsbecken 7. In diesen Belebtschlamm (25 °C) wurden eine Kathode und eine Anode aus Eisen mit einer Elektrodenfläche von je 0,5 m² eingetaucht. Die Elektrolyse wurde bei einer Spannung von 24 V und einer Stromstärke von 1,3 A durchgeführt. Das erhaltene Schlamm/Wassergemisch (elektrolytisch behandelter Belebtschlamm) wurde aus dem Belebungsbecken abgezogen und zum Absetzen in das Nachklärbecken geleitet. Im Nachklärbecken trennte sich der phopsphathältige Schlamm, welcher anschließend von der Schneckenpumpe zu etwa 50% in das Vorklärbecken und der restliche Teil dem Schlamm/Wassergemisch aus dem Vorklärbecken zugemischt wurde, das ins Belebungsbecken floß.

Das geklärte Abwasser wies 0,5 mg PO₄³⁻-Phosphor pro Liter auf. Der COD betrug 37. Das geklärte Abwasser wurde in den Vorfluter geleitet.

## Patentansprüche

1. Verfahren zum Senken des Phosphatgehaltes im Abwasser, das in einem Reinigungskreislauf über einzelne Behandlungsbecken, wie Vorklärbecken, Belebungsbecken, Nachklärbecken geführt wird, dadurch gekennzeichnet, daß das Abwasser in einem Behandlungsbecken mittels Metallelektroden (12) und einer elektrischen Gleichspannung einer Elektrolyse unterworfen wird.

2. Verfahren nach Anspruch 1, dadurch gekennzeichnet, daß die Elektrolyse einstufig durchgeführt wird.

3. Verfahren nach Anspruch 1 oder 2, dadurch gekennzeichnet, daß die Elektrolyse im Belebungsbecken vorgenommen wird.

4. Verfahren nach Anspruch 3, dadurch gekennzeichnet, daß die Elektrolyse bei einer Temperatur von weniger als 40°C durchgeführt wird.

5. Verfahren nach einem oder mehreren der Ansprüche 1 bis 4, dadurch gekennzeichnet, daß die Elektrolyse mit einer Stromdichte von weniger als 0,05 A/dm² Elektrodenoberfläche vorgenommen wird.

6. Verfahren nach einem oder mehreren der Ansprüche 1 bis 5, dadurch gekennzeichnet, daß der Boden und/oder die Wände des Belebungsbeckens als Kathode ausgeführt sind.

## Claims

1. A process for reducing the phosphate content in waste water, which is conducted in a purification cycle trough individual treatment tanks, like sedimentation tanks, activation tanks and final sedimentation tanks, wherein the waste water in a treatment tank is subject to a electrolysis, by means of metal electrodes (12) and a direct current voltage.

2. The process according to claim 1, wherein the electrolysis is performed in a single step.

3. The process according to claim 1 or 2, wherein the electrolysis is performed in a activation tank.

4. The process according to claim 3, wherein the electrolysis is performed with less than 40°C.

5. The process according to claim 1, 2, 3, 4, wherein the electrolysis is performed with a current density of less than 0,05 A/dm² of electrode surface.

6. The process according to claim 1, 2, 3, 4, 5, wherein the ground and/or the walls of the activation tank are carried out as cathodes.

## Revendications

1. Procédé destiné à baisser la teneur en phosphate des eaux usées qui passent, dans un circuit d'épuration, par des bassins de traitement différents, tels que bassin de décantation primaire, bassin d'activation et bassin de décantation finale, caractérisé par le fait que les eaux usées sont soumises, dans un bassin de traitement, à une électrolyse au moyen d'électrodes métalliques (12) et une tension continue électrique.

2. Procédé selon spécification 1, caractérisé par le fait que l'électrolyse est effectué en une étape.

3. Procédé selon spécification 1 ou 2, caractérisé par le fait que l'électrolyse est effectuée dans le bassin d'activation.

4. Procédé selon spécification 3, caractérisé par le fait que l'électrolyse est effectuée à une température inférieure à 40°.

5. Procédé selon une ou plusieurs des spécifications 1 à 4, caractérisé par le fait que l'électrolyse est effectuée avec une densité de courant inférieure à 0,05A/dm² de surface d'électrode.

6. Procédé selon une ou plusieurs des spécifications 1 à 5, caractérisé par le fait que le sol et/ou les parois du bassin d'activation sont exécutés comme cathode.
